(19) Europäisches Patentamt

European Patent Office

Office européen des brevets

(11) **EP 4 187 065 B1**

(12) # EUROPEAN PATENT SPECIFICATION

(45) Date of publication and mention
of the grant of the patent:
**07.08.2024 Bulletin 2024/32**

(21) Application number: **21210388.1**

(22) Date of filing: **25.11.2021**

(51) International Patent Classification (IPC):
*F01N 3/08* $^{(2006.01)}$    *F01N 11/00* $^{(2006.01)}$

(52) Cooperative Patent Classification (CPC):
**F01N 3/08; F01N 11/00;** F01N 2560/026;
F01N 2560/20; F01N 2900/0404; Y02T 10/40

(54) **METHOD AND CONTROL ARRANGEMENT FOR PREDICTING AN UPCOMING FAILURE OF A NOX SENSOR**

VERFAHREN UND STEUERANORDNUNG ZUR VORHERSAGE EINES BEVORSTEHENDEN AUSFALLS EINES NOX-SENSORS

PROCÉDÉ ET AGENCEMENT DE COMMANDE PERMETTANT DE PRÉVOIR UNE PANNE PROCHAINE D'UN CAPTEUR DE NOX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**31.05.2023 Bulletin 2023/22**

(73) Proprietor: **Scania CV AB**
**151 87 Södertälje (SE)**

(72) Inventor: **LINDQVIST, Peter**
**141 72 Segeltorp (SE)**

(74) Representative: **Scania CV AB**
**Patents, GP 117kv**
**151 87 Södertälje (SE)**

(56) References cited:
**WO-A1-2020/222641     CN-A- 102 792 140**

**Description**

Technical field

The present disclosure relates to predicting and detecting a failure of a $NO_x$ sensor in a vehicle. In particular, the disclosure relates to a method for predicting an upcoming failure of a $NO_x$ sensor. The disclosure also relates to corresponding control arrangement and computer program, and to a vehicle comprising the control arrangement.

Background

Exhaust aftertreatment systems are generally designed to reduce emission of particulate matter, nitrogen oxides ($NO_x$), hydrocarbons, and other environmentally harmful pollutants. Aftertreatment systems often comprise $NO_x$ sensors that are inserted in the exhaust stream for use in managing the addition of the reductant material (such as exhaust fluid) to the exhaust stream and other after-treatment practices. Reliable functioning of the aftertreatment system is of course of high importance. However, when an invalid $NO_x$ value is detected, it may be difficult to point out the actual problem in the aftertreatment system, as the invalid $NO_x$ value typically does not indicate what the actual problem is. Hence, an invalid $NO_x$ value may result in a $NO_x$ sensor replacement also when there is another problem causing the error. To overcome this problem, different solutions for $NO_x$ sensor diagnostics, have been proposed.

For example, WO 2020/222641 A1 proposes a diagnostic method for testing a gas sensor mounted in an exhaust gas stream of an internal combustion engine provided with an aftertreatment system and a diagnostic motor management module. The method is based on detecting a noise component from a gas sensor signal to derive a fault sensor condition. However, there is still a need for improved methods for $NO_x$ sensor diagnostics.

Summary

It is an object of the disclosure to alleviate at least some of the drawbacks with the prior art. In particular it is an object to provide improved methods for $NO_x$ sensor diagnostics.

Many $NO_x$ sensors tend to at normal usage become noisy at end of lifetime. However, it may be quite inconvenient for a driver to be informed about an error when the noise is so severe, that a total breakdown is imminent or has even already occurred, which would typically be the result when using the technique proposed in WO 2020/222641 A1. It would instead be desirable to provide an earlier warning of end of lifetime of the $NO_x$ sensor, such that the driver may plan for a visit to a workshop. Thus, one object of the disclosure is to provide a way to identify a $NO_x$ sensor on the way to fail, as well as to determine when it is failing.

According to a first aspect, this disclosure proposes a method for predicting an upcoming failure of a $NO_x$ sensor arranged in a vehicle. The method comprises estimating a noise level of an output signal of the $NO_x$ sensor. The estimation is performed after at least one sensor start and during at least one start-up time interval starting with a certain offset from the at least one sensor start. During the start-up time interval an output signal level of the $NO_x$ sensor is settling towards a valid value. The at least one start-up time interval is succeeded by an operating time interval during which the output signal of the $NO_x$ sensor is expected to be valid. The method further comprises predicting an upcoming failure of the $NO_x$ sensor based on the estimated noise level exceeding a certain noise level during the at least one start-up time interval. The proposed method provides better diagnostics for identifying or excluding a failing $NO_x$ sensor at an early stage in the failing procedure. The identification may be used as a reasonable condition for sensor replacement.

In some embodiments, the at least one start-up time interval starts at the latest 20s after a sensor start and ends at the latest 180 seconds after a sensor start. By collecting $NO_x$ sensor data just after sensor start, early failure detection may be performed in an efficient manner.

In some embodiments, a sensor start is defined as a point in time after the sensor is switched on when the $NO_x$ sensor starts to deliver "non-static" values. In this way the relevant time interval for measuring noise is identified.

In some embodiments, the sensor start is preceded by a warm-up operation that brings the $NO_x$ sensor from a standby temperature towards an operating temperature at which the $NO_x$ sensor delivers "non-static" values. By measuring noise right after warm-up the failure may be identified in good time before the $NO_x$ sensor becomes faulty, as this is the point in time where the noise is expected to appear first.

In some embodiments, the method comprises estimating a noise level of the output signal of the $NO_x$ sensor during the operating time interval and predicting the upcoming failure of the $NO_x$ sensor also based on the estimated noise level during the operating time interval. By estimating noise both during start-up and operation intervals the prediction and/or detection of a failure may be more accurate.

In some embodiments, the at least one start-up time interval comprises a first start-up time interval and a second start-up time interval and wherein the predicting is based on respective estimated noise levels during the first and second start up time intervals. By estimating noise in different time intervals during start-up the prediction of the failure may be more accurate.

In some embodiments, the first start-up time interval starts at 2 -10s after the start of the $NO_x$ sensor and ends 5-15 seconds after the start of the $NO_x$ sensor. In some embodiments, the second start-up time interval starts 5-15s after the start of the $NO_x$ sensor and ends 20-40 seconds after the start of the $NO_x$ sensor. These may be suitable time intervals for estimating noise for some $NO_x$ sensors.

In some embodiments, the method comprises estimating a timing of the predicted upcoming failure based on the time intervals during which the noise level of the output signal exceeds the certain noise level. Thereby, a driver may plan for a visit to a workshop before the error occurs.

In some embodiments, the method comprises estimating that the $NO_x$ sensor is about to fail within a certain time, based on the noise level of the output signal only exceeding the certain noise level during the at least one start-up time interval. By comparing the noise level during a start-up interval with a threshold an upcoming $NO_x$ sensor failure may be predicted.

In some embodiments, the method comprises estimating that the $NO_x$ sensor is failing before the certain time, based on the noise level of the output signal also exceeding the certain noise level during the operating time interval. By also comparing the noise level during an operation interval with a threshold an urgent need to exchange the $NO_x$ sensor failure may be detected.

In some embodiments, the method comprises providing a warning signal upon the predicting indicating an upcoming failure of the $NO_x$ sensor. Thereby, the driver is informed about the $NO_x$ sensor condition.

In some embodiments, start of sensor is defined as when the $NO_x$ sensor starts to deliver a first high $NO_x$ value, such as more than 3000 ppm. In this way a time when noise measurements shall be started can be identified or detected.

In some embodiments, the noise level is estimated to correspond to a variation of the output signal of the $NO_x$ sensor over an evaluation period, wherein the variation is compensated for an output signal level change over the evaluation period. This is one example of how noise level may be estimated.

According to a second aspect, the disclosure relates to a control arrangement being configured to perform the method according to any one of the embodiments of the first aspect.

According to a third aspect, the disclosure relates to a vehicle comprising the control arrangement of the second aspect.

According to a fourth aspect, the disclosure relates to a computer program comprising instructions which, when the program is executed by a computer, cause the computer to carry out the method according to the first aspect.

According to a fifth aspect, the disclosure relates to a computer-readable medium comprising instructions which, when executed by a computer, cause the computer to carry out the method according to the first aspect.

Brief description of the drawings

Fig. 1 illustrates a vehicle comprising a $NO_x$ sensor.
Fig. 2 illustrates an output signal of a $NO_x$ sensor just before and after start of the sensor.
Fig. 3a illustrated a filtered mean std noise level as a function of time for tail pipe $NO_x$ sensor on truck.
Fig. 3b is a zoom-in on the $NO_x$ sensor failing time period.
Fig. 4 is a flow chart of the proposed method according to the first aspect.
Fig. 5 illustrates a control arrangement.

Detailed description

The inventors have, based on data acquired from $NO_x$ sensors in trucks, realized that it is possible to detect a precursor of a failing $NO_x$ sensor several weeks before the $NO_x$ sensor becomes unusable. The proposed technique is based on the insight that the $NO_x$ sensor signal is more sensitive to non-ideal conditions just after start-up than after a short while. A method for diagnosing a $NO_x$ sensor is therefore proposed where processing is limited to $NO_x$ sensor data acquired during a short time interval right after start-up of the $NO_x$ sensor, such as up to about two minutes after sensor start (as will be defined below). In short, it is herein proposed that a noise level of a $NO_x$ sensor signal is evaluated just after sensor start and that this noise level is monitored over time (i.e. over several sensor starts). Based on how long after $NO_x$ sensor start, the noise level starts to increase, a warning for a future sensor failure can be given as well as an indication of when it is time to change the $NO_x$ sensor.

A $NO_x$ sensor may typically provide two different output signals, $O_2$ and $NO_x$. The estimation of noise may be performed on any one of these signals to diagnose the $NO_x$ sensor.

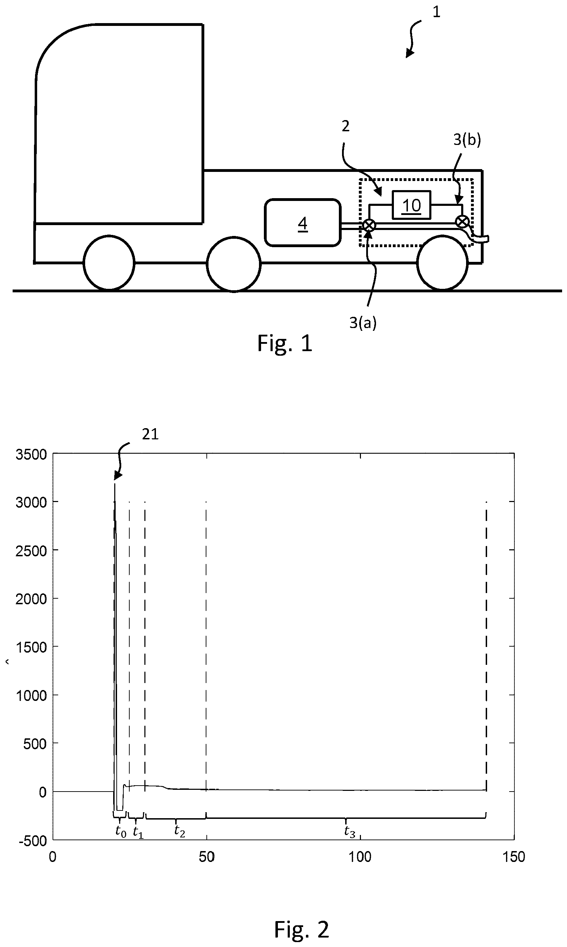

The proposed technique will now be described with reference to Figs. 1-4. Fig. 1 conceptually illustrates a vehicle 1, here a truck, where the proposed technique for diagnosing a $NO_x$ sensor may be implemented. The vehicle 1 may comprise a means for transportation in broad sense and is for example a bus, a truck, or other similar manned or unmanned vehicle.

The vehicle 1 comprises a plurality of electrical systems and subsystems. However, for simplicity only some parts of the vehicle 1 that are associated with the proposed technique are shown in Fig. 1. Hence, the illustrated vehicle 1 comprises an exhaust aftertreatment system 2 for reducing harmful exhaust emissions from an internal-combustion engine 4. More specifically, the exhaust aftertreatment system 2 cleans exhaust gases to ensure the engines meet emission regulations. The exhaust aftertreatment system 2 comprises one or more $NO_x$ sensors 3 (denoted (a) and (b)) and a control arrangement 10.

The $NO_x$ sensor 3 is a sensor that is configured to monitor a level of nitrogen oxide being emitted by a combustion vehicle, for example to ensure compliance with emissions regulations. $NO_x$ sensors may be arranged at several different positions in the exhaust system, for example at a tail pipe 3 (b) or at an engine output 3 (a). One vehicle may comprise many $NO_x$ sensors 3, each of which may be diagnosed with the proposed technique. In the example of Fig. 1 two $NO_x$ sensors 3 are illustrated. The $NO_x$ level is typically monitored in an ongoing manner and possibly in real-time. Apart from measuring the $NO_x$ level, some $NO_x$ sensors also monitor $O_2$ concentration. In the future, $NO_x$ sensor may also measure other gases, the mass of exhaust flow, and other parameters. In other words, the $NO_x$ sensor is configured to provide one or more output signals, also referred to as $NO_x$ sensor signals, such as $NO_x$ level and $O_2$ level. The proposed technique may be used on any of these signals. The output signal may be an analogue signal, or a digital signal. A sampled analogue output signal, or digital output signal, is herein referred to as $NO_x$ sensor data or sensor values.

The control arrangement 10 is basically a digital computer that is configured to perform the proposed method for diagnosing a $NO_x$ sensor 3. The control arrangement 10 may comprise one or more ECUs. ECU is a generic term that is used in automotive electronics for any embedded system that controls one or more functions of the electrical system or sub systems in a transport autonomous vehicle. A vehicle typically comprises a plurality of ECUs that communicate over a Controller Area Network, CAN. For example, the illustrated ECU comprises an Aftertreatment Control Module, ACM.

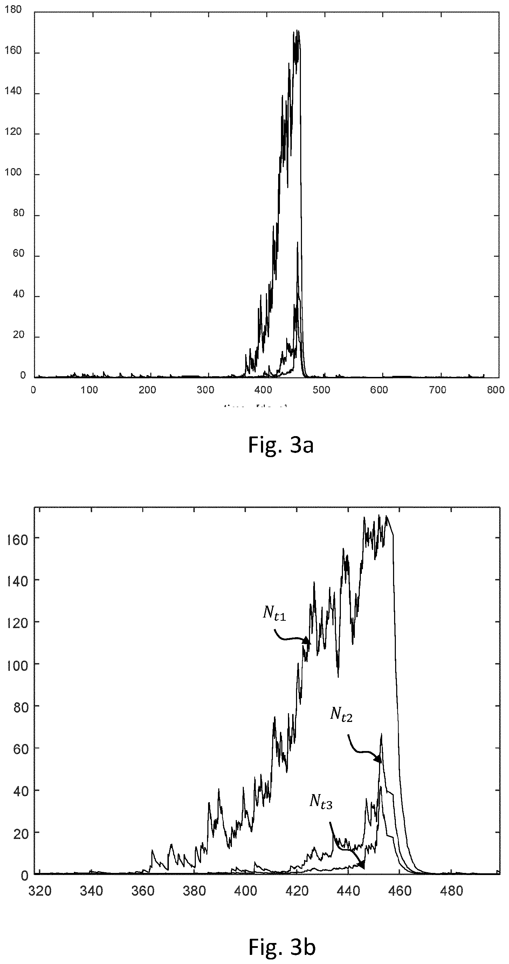

In the illustrated embodiment, the control arrangement 10 is configured to perform the proposed method onboard. The control arrangement 10 is configured to receive an output signal, such as $NO_x$ sensor data (i.e. sensor values), from the $NO_x$ sensor 3. For example, sensor data is collected at every $NO_x$ sensor start and sent to the control arrangement 10 for further processing and analysing. It must be appreciated that in alternative embodiments the control arrangement 10 may be, at least partly, arranged off-board. The control arrangement 10 will be described in further detail below. The proposed technique for diagnosing a $NO_x$ sensor will now be conceptually explained with reference to Figs. 2 and 3a-3b.

The proposed technique is based on analysing a noise level of an output signal of the $NO_x$ sensor. The output signal, also referred to as $NO_x$ sensor signal, is basically a signal that corresponds to or represents a measured $NO_x$ level. Noise is typically defined as a deviation, such as a standard deviation, of individual samples from an average level. In other words, noise may be seen as level of instantaneous deviation from a smooth curve.

First, an example measure for the noise level is defined. It must be anticipated that the noise level may be defined in several different ways, and this is only one example, which is described for reference.

In this example a mean value for the output signal between two samples (*n* - 1 *and n*) is determined as:

$$NOx\_mean_n = (NOx_n + NOx_{n-1})/2 \qquad (1)$$

Noise at sample $NOx\_noise_n$ will then be defined as a deviation of the individual sample *n* from the mean $NOx\_mean_n$:

$$NOx\_noise_n = NOx_n - NOx\_mean_n \qquad (2)$$

The average noise level over a time period (for example 1 second) comprising N samples is then defined as a standard deviation similar expression that corrects for the general change over the evaluation period as:

$$NOx\_mean\_noise_{N1} = \sqrt{\frac{\sum_{N0}^{N1}(NOx\_noise_n)^2}{N}} - \frac{|NOx\_noise_{N1} - NOx\_noise_{N0}|}{2N} \qquad (3)$$

In equation (3), *N*0 is the first sample in the time period and *N*1, the last sample in the time period, where *N* = *N*1 - *N*0 + 1. With this definition *NOx_mean_noise* = 0 if the sensor values are on a straight line.

In other words, noise is defined as irregular fluctuations that accompany the output signal but that are not part of it. The noise level herein represents an amplitude or power of such irregular fluctuations. In some embodiments, the noise level is estimated, or calculated, to correspond to a variation of the output signal of the $NO_x$ sensor over an evaluation period, such as one or a few seconds. In some embodiments, the variation is compensated for an output signal level change over the evaluation period. In other words, the variation may be compensated for a signal level change that corresponds to an actual change of the output signal caused for example by a change in $NO_x$ level. As stated above, the proposed technique may as well be implemented using other ways of estimating the noise level.

The proposed technique is based on estimating a noise level of an output signal of the $NO_x$ sensor in different time intervals that take place right after start-up of the $NO_x$ sensor.

Fig. 2 illustrates an output signal (y-axis) of a $NO_x$ sensor over time (x-axis) just before and after start of the sensor. The $NO_x$ sensor is placed in a test environment without $NO_x$. Hence, a valid output signal should be about the zero level. In this example, the time around start of the $NO_x$ sensor is divided into a plurality of time segments denoted $t_0$, $t_1$, $t_2$, $t_3$. More specifically, the time around sensor start is divided into an initial time interval $t_0$, two start-up time intervals $t_1$, $t_2$ and an operation time interval $t_3$. The division into time intervals will now be explained in more detail, with reference to this example. The length of the intervals may vary between different sensors, but the principle for determining the timings of the intervals is still similar.

The sensor head of the $NO_x$ sensor 3 is typically a ceramic rod. Inside the rod an electric heater is arranged, along with electric conductors forming electrodes where gas can react catalytically. The ceramic rod also comprises cavities where gas diffuse. The $NO_x$ sensor 3 has a working temperature of about 800-850 C° and is sensitive to sharp temperature changes that can induce stress in the sensor head which may cause cracking the ceramics. The cracking may result in reduction of electrode surfaces, changes in the gas diffusion and in that the electric conductors break.

In a cold after treatment system 2, there may be water that is forced out when the engine is started or evaporated when the exhaust system is warmed up. To protect the $NO_x$ sensor 3 from the water or damage, the $NO_x$ sensor 3 is normally kept in a "stand-by" position (reasonably low temperature to prevent damage) until it is assured that all water is gone. When it is appreciated that all water is gone, an order is sent to the $NO_x$ sensor 3 to heat up to its working temperature.

Hence, the order to start warming up may in principle be sent at any time after power is connected to the $NO_x$ sensor. The time to heat up is for example in the range 30 to 120 seconds. Before and during the heating, the output signal comprises "dummy" values. These values are static to the extent that one and the same value is sent many times. The static values may indicate that there is no real value corresponding to a $NO_x$ or $O_2$ level, but it may also be values that could be measured output levels. Depending on where in the heating up process, different static values can be sent.

After a certain amount of heating, the sensor begins to deliver values that change over time (i.e. non-static values). This indicates that the $NO_x$ sensor is approaching a temperature where measured $NO_x$ and $O_2$ levels correspond to "valid" values (see below). At this time, the $NO_x$ sensor may be considered started, but not fully operational as the values are typically still not fully "valid". In other words, in some embodiments, sensor start 21 is defined as a point in time, after the sensor is switched on, when the $NO_x$ sensor 3 starts to deliver "non-static" values. In other words, sensor start 21 takes place after the sensor is switched on, which herein typically refers to that power is connected to it. The time between switch on and sensor start 21 may vary. The sensor start 21 is preceded by a warm-up operation that brings the $NO_x$ sensor 3 from a standby temperature towards an operating temperature at which the $NO_x$ sensor 3 delivers "non-static" values. The sensor start 21 is succeeded by "start-up" operation characterised in that the $NO_x$ sensor 3 delivers non-static values that may not be fully valid. Other sensor types may have different start-up behaviour.

At start-up, the output level of the $NO_x$ sensor 3 may have a characteristic curve shape where the sensor output typically rises to over 3000 ppm at the sensor start 21, as illustrated in Fig 2. After sensor start 21 the output signal level drops quickly, whereby a peak shape is formed. In other words, in some embodiments, start of sensor is defined as when sensor starts to deliver a first high $NO_x$ value, such as more than 3000 ppm. Based on simulations on one specific tail pipe sensor, it was concluded that, for the sensor type used, the time for the output signal to stabilize was about 15-30 seconds from sensor start. Other sensor types may have a different typical start-up process, but also take time to "stabilize". When the sensor has stabilized it typically deliver "valid" values, which here corresponds to a zero level. This corresponds to normal operation of the $NO_x$ sensor.

There may of course be some noise even when the signal has stabilised, but at this stage the output signal level (such as the low pass filtered output signal signal) should typically at least be correct. Hence, in some embodiments, the output signal is considered valid when the output signal level is valid. In some embodiments, the output signal is expected to be valid when enough time has elapsed since sensor start, to assure that any invalidity is not caused by the start-up process, heating, etc. The time required to assure this is typically specified by the sensor manufacturers and differs for different sensors

In summary, after sending a start command that triggers the heat up to the $NO_x$ sensor, the operation of the $NO_x$ sensor goes through different stages. One could say that the start-up procedure comprises "initial operation", characterised by heat up, where sensor output is characterised by static values. The initial operation is followed by "start-up operation" where sensor output is non-static, but possibly invalid. When the start-up procedure is complete, the $NO_x$

sensor is in "normal operation", which is characterised by that the output signal is valid, provided that the sensor is not broken or defect in some way.

The proposed technique is based on the insight that right after start-up it is possible to detect elevated noise levels (or elevated sensor instability), which is correlated with an upcoming sensor failure and may thus be used for $NO_x$ sensor diagnosis. In other words, elevated noise levels can be seen at times when the sensor deliver values between static values and "valid" values.

Furthermore, the inventors have gained the insight that for a $NO_x$ sensor 3 that is about to break, the length of a time span with elevated sensor instability increases the closer the time of complete breakdown is. In other words, when a sensor is approaching end of lifetime, noise will first appear within a time span right after start-up 21. This time span will then extend in time the closer the breakdown gets. The process is typically not monotonic. Hence, noisy and noise free periods may occur stochastically. When the sensor is finally broken (i.e. end of lifetime) it cannot provide any valid values anymore.

It is herein proposed to diagnose a $NO_x$ sensor by studying a noise level of an output signal of the $NO_x$ sensor in different time intervals (or time windows) after each sensor start in order to see how noise in the different time periods change over time. The definition of time intervals used for the sensor diagnosis is based on these different types of operation described above.

More specifically, the time interval around sensor start 21 is here referred to as an initial time interval $t_0$. The initial time interval $t_0$ comprises warm-up operation, and possibly also a short time right after sensor start 21. Before sensor start 21 it does generally not make any sense to analyse the output signal of the $NO_x$ sensor, as it typically comprises dummy values. Also, the first seconds after sensor start 21 may be of less value, due to the peak behaviour described above. Hence, the initial time interval $t_0$ is a time interval that may be omitted in the $NO_x$ sensor diagnoses.

One or more intervals succeeding the initial time interval $t_0$ comprises the "start-up operation" described above and are of particular interest for the diagnosis as this is where noise is likely to appear first when a breakdown is approaching. These intervals are herein referred to as start-up intervals and are characterised in that the $NO_x$ sensor is started in the sense that it does not deliver static values. In the start-up interval the output signal may not be completely valid. In the illustrated example there are two start-up intervals $t_1$, $t_2$. In the first start-up interval $t_1$ the sensor output is invalid (i.e. non-zero) all the time. The second start-up interval $t_2$ comprises the middle and the end of the "start-up operation". In Fig. 2 it is visible that during the end of the second start-up interval $t_2$ the output signal stabilises at a valid level (i.e. zero). The succeeding interval $t_3$, which is characterised by that the $NO_x$ sensor delivering (or is at least expected to deliver) valid output values, is herein referred to as an operation time interval $t_3$.

It may be difficult to detect the actual timing of the sensor start. Also, it may as mentioned above not be desirable to analyse signal properties around the initial peak at sensor start. Hence, in the illustrated example the first start interval $t_1$ starts a few seconds after sensor start 21. The first start interval $t_1$ just after start, is typically only a few seconds in length. Subsequent time intervals $t_2$, $t_3$ are typically longer.

In the illustrated example embodiment the three time intervals are defined as follows:

- first start-up interval $t_1$: from 5 seconds to 10 seconds after start of sensor.
- second start-up interval $t_2$: from 10 seconds to 30 seconds after start of sensor.
- operation interval $t_3$: from 30 seconds to about 90 seconds after start of sensor.

The number of time intervals is up to implementation and may depend on a level of detail required in the diagnosis. Also relevant time intervals depends on which type of sensor is used. In a very simple embodiment, a noise level is estimated in one starting interval which starts at the latest 20s after a sensor start and ends at the latest 180 seconds after a sensor start.

One way of determining the time intervals is to study a curve shape of a $NO_x$ sensor 3 in a test environment. Another possibility is to make a rough estimation based on a predefined settling time (i.e. time to operation) defined by the manufacturer. The one or more start-up intervals $t_1$, $t_2$ would then mainly take place before the settling time.

Fig. 3a illustrates noise level as a function of time for tail pipe sensor on truck. In Fig 3a the x-axis represents time in days and the y-axis illustrates filtered mean std noise levels $N_{t1}, N_{t2}, N_{t3}$ estimated in time intervals $t_1$, $t_2$, $t_3$ using the example time intervals and formula described above. The sensor used is a Continental Generation 2.8 $NO_x$ sensor. In this example, the mean std is determined for data over 1 second. Fig. 3b is a zoom-in on the sensor failing time period. The noise level may vary considerably from one start to another, and occasional high values may also occur. A low pass filter may therefore be used to remove most of the variation and better illustrate the onset of sensor end of lifetime. Hence, the signals in Fig 3a and 3b are low pass filtered noise levels.

In the diagram it is visible that for all time intervals $t_1$, $t_2$, $t_3$ levels for noise will stay below certain levels until sensor start to approach end of lifetime. The time scale in days do not refer to the lifetime of the sensor, but to a time period the sensor position was evaluated. When end of lifetime is approaching noise level in a first start-up time interval $t_1$ start to increase. This happened after about 360 days. Around day 420, when noise levels in time segment $t_1$ has

reached a significant level, the noise levels in proceeding second start-up interval $t_2$ also start to increase. Finally, around day 440, noise level also start to increase in operation interval $t_3$. Noise level appearing after about 1 min can be considered as the "long time" noise level and is an indicator of an absolute need to change the $NO_x$ sensor. In this example the $NO_x$ sensor is replaced around day 455. Hence, a clear indication for what is about to come can typically be determined from around day 370 - 390. Thus, with the proposed technique, it is possible to predict the breakdown based on noise level in time segment $t_1$ many weeks (here about 90 days) before the end of life.

Actual output signal levels that should be used as triggers to replace a $NO_x$ sensor, as well as length of time segments, is up to implementation and depends on hardware, placement and other requirements, such as error tolerance. The noise levels may of course also be evaluated and judged together with other information and other sensor data. For example, with several $NO_x$ sensors in the after treatment system, time series and levels may be compared.

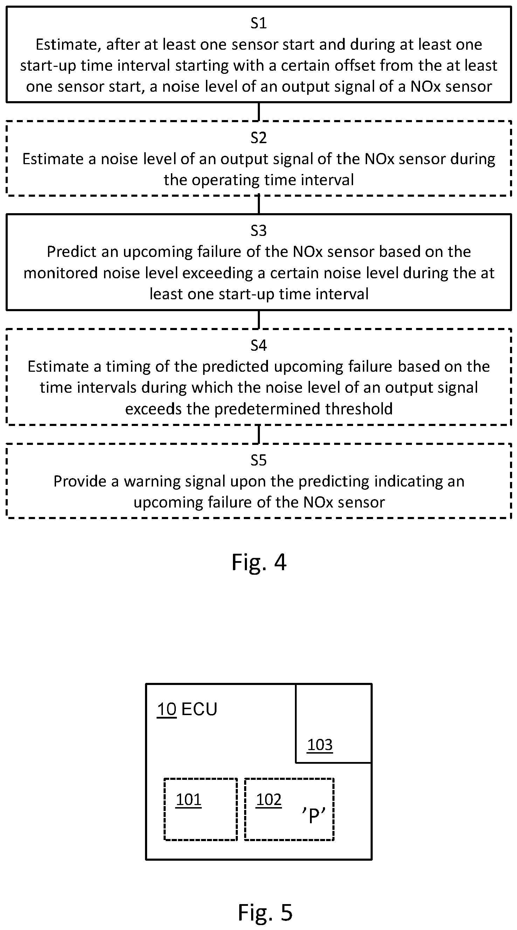

The proposed method for predicting an upcoming failure of a $NO_x$ sensor will now be described with reference to Fig. 4. A failure herein refers to an error or defect caused by end of lifetime, that may cause the $NO_x$ sensor to deliver faulty output signals. In some embodiments, the failure may be a total breakdown. The method is performed by a control arrangement 10 (Fig. 1 and Fig. 5) which may be arranged on-board and/or off-board. The control arrangement 10 is for example an ECU of an aftertreatment system 2 of the vehicle 1 or an off-board server (not shown). The method is typically performed in an ongoing manner while the vehicle is operated.

The method may be implemented as a computer program comprising instructions which, when the program is executed by a computer (e.g. a processor in the control arrangement 10 (Fig. 2)), cause the computer to carry out the method. According to some embodiments the computer program is stored in a computer-readable medium (e.g. a memory or a compact disc) that comprises instructions which, when executed by a computer, cause the computer to carry out the method. The method is typically performed during normal operation of a vehicle and is typically repeated several times, such as after every $NO_x$ sensor start, or with some intervals. Before the method for diagnosing is started some pre-processing such as low pass filtering may be performed.

In an initial step the control arrangement obtains $NO_x$ sensor data and/or an output signal from a $NO_x$ sensor. If the control arrangement 10 is arranged on-board sensor data may be communicated directly from the $NO_x$ sensor or over the CAN bus. An off-board control arrangement 10, may receive sensor data via a communication interface configured to enable communication with the vehicle 1.

Hence, after a sensor start 21 noise level of an output signal of the $NO_x$ sensor 3 is estimated. In other words, the method comprises estimating S1 a noise level of an output signal of the $NO_x$ sensor 3. The estimation S1 is performed after at least one sensor start (as described above) and during at least one start-up time interval $t_1$, $t_2$ starting with a certain offset from the at least one sensor start. In other words, in some embodiments the estimating S1 is performed repetitively over time after a plurality of sensor starts. The noise level is a measure defining an amount of noise in the at least one start-up interval. The noise level estimation S1 is performed by analysing $NO_x$ sensor data using for example the algorithm described above.

Typically, the data used as a basis for the estimation S1 is collected after each sensor start, but it may also be collected after some sensor starts, such as after every second or third sensor start etc. In some embodiments, data for several sensor starts are first collected and noise level is estimated S1 afterwards, but typically relatively shortly after. This may be feasible if the estimating S1 is performed off-board. Alternatively, noise level is estimated S1 in real-time. The estimation S1 may be done for one or more output signals such as output signals representing $O_2$ or $NO_x$ level.

The certain offset in relation to the sensor start 21 depends on the implementation, but the at least one start-up time interval $t_1$, $t_2$ should at least cover a time period that takes place before the output signal of the $NO_x$ sensor is stable. For example, the certain offset is 5 seconds as in the example above, but longer intervals may be feasible. The certain offset may be calculated by studying a curve shape at start-up of the particular sensor type to be analysed in a known environment, for example in a test chamber free from $NO_x$. The certain offset shall typically be set such that the initial peak after start-up is excluded, while a period when the output signal is settling towards a valid level is included in the at least one start-up time interval $t_1$, $t_2$.

During the start-up time interval $t_1$, $t_2$ an output signal level of the $NO_x$ sensor 3 is settling towards a valid value. In other words, the level of the output signal is approaching a valid level. The at least one start-up time interval $t_1$, $t_2$ is succeeded by an operating time interval $t_3$ during which the output signal of the $NO_x$ sensor 3 is expected to be valid, as explained above. In other words, in the operating time interval $t_3$ the output signal level has settled at a valid level.

The at least one start-up time interval comprises one, or two or more, start-up time intervals. In some embodiments, the at least one start-up time interval $t_1$, $t_2$ comprises a first start-up time interval $t_1$ and a second start-up time interval $t_2$. In some embodiments, the first start-up time interval $t_1$ starts at 2 -10s after the start of the $NO_x$ sensor 3 and ends 5-15 seconds after the start of the $NO_x$ sensor 3. In some embodiments, the second start-up time interval $t_2$ starts 5-15s after the start of the $NO_x$ sensor 3 and ends 20-40 seconds after the start of the $NO_x$ sensor 3. As described above, suitable time periods for the time intervals are up to implementation and sensor type.

In addition to estimating the noise level during the at least one start-up time interval $t_1$, $t_2$ the noise level may also be estimated during normal operation $t_3$. A normal noise level during normal operation may serve as a confirmation that the sensor is likely delivering valid values once the output level has settled. Also a more urgent need for replacement may be detected or confirmed by analysing the noise level in this interval. In other words, in some embodiments, the method comprises estimating S2 a noise level of the output signal of the $NO_x$ sensor 3 during the operating time interval $t_3$.

The $NO_x$ sensor is then diagnosed by analysing the noise level in the one or more start-up intervals. This may be done by comparing the present noise level for one start-up interval with a certain noise level of the start-up interval, such as a reference noise level. In some embodiments, the certain noise level may be a threshold. The certain noise level may be predefined. In some embodiments, the certain noise level may be updated in an ongoing manner based on data from other vehicles. The certain noise level may be a level which is significantly higher (i.e. a certain amount higher) than an expected noise level for properly functioning $NO_x$ sensors. The certain noise level may be determined by measuring the noise level for a large number of reference vehicles with fully funnctional sensors. In experiments noise level equal to 10 times the average noise level of a fully functional sensor noise was used.

More specifically, the $NO_x$ sensor may then be diagnosed by analysing changes in noise level in the start-up interval. If noise is detected this serves as an indication of an upcoming failure or breakdown. If there has not been any noise in previous start-up intervals, then an elevated noise level in the start-up interval may be an indication of an upcoming breakdown due to end of lifetime. In other words, the method comprises predicting S3 an upcoming failure of the $NO_x$ sensor 3 based on the estimated noise level exceeding a certain noise level during the at least one start-up time interval $t_1$, $t_2$.

Accuracy of the diagnosis may be achieved by studying the noise level in a plurality of (i.e. two or more) start-up time intervals, as explained above. The longer after start-up noise is present, the closer is the upcoming failure. Hence, in some embodiments, the predicting S3 is based on respective estimated noise levels during the first and second start up time intervals $t_1$, $t_2$.

In some embodiments, the predicting S3 is also based on the estimated noise level during the operating time interval $t_3$. Noise in the operating time interval $t_3$ is typically an indication about a failure that is imminent. On the other hand, absence of noise in the operating time interval $t_3$, may server as an indicator that the break down is not equally imminent.

As the noise level may vary considerably from one sensor start to another and occasional high values may occur, low pass filtering may first be performed to remove most of the variation and better reflect noise caused by the upcoming breakdown. Stated differently, in some embodiments a time series of evaluated noise levels (corresponding to a time series of succeeding sensor starts), is low pass filtered to remove occasional high values and focus on persistent high values. In this way single bad values are ignored. In some embodiments, the predicting is based on low pass filtered noise level during the time intervals $t_1$, $t_2$, $t_2$, for a time series of sensor starts.

Hence, by analysing in which intervals the noise level is elevated and to what extent it is possible to predict when an upcoming breakdown will occur. Typically each defined time interval may be associated with a certain timing in relation to the actual break down. These timings would typically depend on sensor type and implementation and could be determined by studying data from similar vehicles. In other words, in some embodiments, the method comprises estimating S4 a timing of the predicted upcoming failure based on the time intervals $t_1$, $t_2$, $t_3$ during which the noise level of the output signal exceeds the certain noise level. The estimate of when the sensor will break may be quite uncertain, with a large variation. However the noise level in the different time segments gives an indication of the speed of the break down process.

For example, it may be expected that the $NO_x$ sensor will fail at the earliest in x weeks when there is noise in interval $t_1$, $t_2$ but not, $t_3$. However, if there is only noise in $t_1$, then the breakdown may be expected after more than y weeks, where y weeks is more than x weeks. The parameters x and y depend on implementation and on the $NO_x$ sensor type and model. More extensive testing in a known environment may be performed to identify behaviour at start-up of different sensor types. For example, time it takes for the sensor to go from "initial operation" to "start-up operation" and finally to "normal operation" may be analysed by studying the output signal of a $NO_x$ sensor in a test environment where the $NO_x$ level is known. Thereafter, suitable time intervals $t_1$, $t_2$, $t_3$ for the diagnosis may be determined as described above. Stated differently, in some embodiments, the method comprises estimating S4 that the $NO_x$ sensor 3 is about to fail within a certain time, based on the noise level of the output signal only exceeding the certain noise level during the at least one start-up time interval $t_1$, $t_2$. As described above, the certain time depend on the $NO_x$ sensor type and model and for accurate timings more extensive testing may be performed. If the method is performed off-board parameters like the certain time and above mentioned thresholds may be adjusted based on data from a plurality of vehicles, such as from an entire fleet of vehicles.

On the other hand, if there is also elevated noise in $t_3$ then it is expected that the $NO_x$ sensor will fail before the x weeks. For example, a few weeks earlier. In this scenario, when there is typically noise in all analysed time intervals it may be that the $NO_x$ sensor has already started to fail. Stated differently, in some embodiments, the method comprises estimating S4 that the $NO_x$ sensor 3 is failing before the certain time, based on the noise level of the output signal also exceeding the certain noise level during the operating time interval $t_3$.

The outcome of the diagnoses may be used in different ways. Typically it is desirable to inform a driver or owner of the vehicle 1 about the failure or upcoming failure. Hence, in some embodiments, the method comprises providing S5 a warning signal upon the predicting indicating an upcoming failure of the $NO_x$ sensor 3. The warning signal is typically sent over the CAN bus to another ECU, such as the Instrument Cluster, ICU. The ICU may then provide a visible (or audible, tactile etc.) warning to the driver. The warning may alternatively be wirelessly communicated to for example a workshop.

Fig. 5 illustrates a control arrangement 10 configured to implement the proposed method or use in a vehicle comprising a $NO_x$ sensor 3 in more detail. In some embodiments, the control arrangement 10 is a "unit" in a functional sense. Hence, in some embodiments the control arrangement 10 is a control arrangement comprising several physical control devices that operate in cooperation. The control arrangement may be arranged on-board and/or at least partly off-board.

The control arrangement comprises a processor 101 and memory 102. The control arrangement 10, or more specifically the processor 101 of the control arrangement 10, is configured to cause the control arrangement 10 to perform all aspects of the method described above and below. This is typically done by running computer program code P stored in the data storage or memory 102 in the processor 101 of the control arrangement 10. The data storage 102 may also be configured to store parameters for use when diagnosing the $NO_x$ sensor, such as time offsets and threshold values mentioned above.

The control arrangement 10 may also comprise a communication interface 103 for communicating with other control units of the vehicle (for example over the ECU) and/or with external systems, such as with an off-board server. If the control arrangement is arranged off-board the communication interface is configured to receive $NO_x$ sensor data from the vehicle 1.

More specifically, the control arrangement 10 is configured to estimate S1 a noise level of an output signal of the $NO_x$ sensor 3, during at least one start-up time interval $t_1$, $t_2$ that takes place shortly after each time the $NO_x$ sensor 3 is started, and to predict an upcoming failure of the $NO_x$ sensor 3 based on the estimated noise level exceeding a certain noise level during the at least one start-up time interval $t_1$, $t_2$.

This document has dealt with a sensor failing to produce valid $O_2$ and $NO_x$ values as "at end of lifetime". This is not necessarily completely true. It is possible that the engine and after treatment system are responsible for the sensor behaviour, i.e. the sensor cannot produce good data any longer under the conditions it is working, but if conditions were much less unideal, the sensor would start to produce good data again. It can also be that something else in the exhaust aftertreatment system is broken. However, to what extent a sensor can recover or to what extent the engine and exhaust system is contaminating or accelerating a sensor failure, is not the scope here.

The terminology used in the description of the embodiments as illustrated in the accompanying drawings is not intended to be limiting of the described method, control arrangement or computer program. Various changes, substitutions and/or alterations may be made, without departing from disclosure embodiments as defined by the appended claims.

The term "or" as used herein, is to be interpreted as a mathematical OR, i.e., as an inclusive disjunction; not as a mathematical exclusive OR (XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. A single unit such as e.g. a processor may fulfil the functions of several items recited in the claims.

**Claims**

**1.** A method for predicting an upcoming failure of a $NO_x$ sensor (3) arranged in a vehicle (1), the method comprising:

- estimating (S1) a noise level of an output signal of the $NO_x$ sensor (3),

    wherein the estimation (S1) is performed after at least one sensor start and during at least one start-up time interval ($t_1$, $t_2$) starting with a certain offset from the at least one sensor start,
    wherein during the start-up time interval ($t_1$, $t_2$) an output signal of the $NO_x$ sensor (3) is settling towards a valid value and
    wherein the at least one start-up time interval ($t_1$, $t_2$) is succeeded by an operating time interval ($t_3$) during which the output signal of the $NO_x$ sensor (3) is expected to be valid, and

- predicting (S3) an upcoming failure of the $NO_x$ sensor (3) based on the estimated noise level exceeding a certain noise level during the at least one start-up time interval ($t_1$, $t_2$).

2. The method of claim 1, wherein the at least one start-up time interval ($t_1$, $t_2$) starts at the latest 20s after a sensor start and ends at the latest 180 seconds after a sensor start.

3. The method of claim 1 or 2, wherein a sensor start is defined as a point in time after the sensor is switched on when the $NO_x$ sensor (3) starts to deliver "non-static" values.

4. The method of any of the preceding claims, wherein the sensor start is preceded by a warm-up operation that brings the $NO_x$ sensor (3) from a standby temperature towards an operating temperature at which the $NO_x$ sensor (3) delivers "non-static" values.

5. The method of any of the preceding claims, comprising:

   - estimating (S2) a noise level of the output signal of the $NO_x$ sensor (3) during the operating time interval ($t_3$) and predicting (S3) the upcoming failure of the $NO_x$ sensor (3) also based on the estimated noise level during the operating time interval ($t_3$).

6. The method of any of the preceding claims, wherein the at least one start-up time interval ($t_1$, $t_2$) comprises a first start-up time interval ($t_1$) and a second start-up time interval ($t_2$) and wherein the predicting (S3) is based on respective estimated noise levels during the first and second start up time intervals ($t_1$, $t_2$).

7. The method of claim 6, wherein the first start-up time interval ($t_1$) starts at 2 -10s after the start of the $NO_x$ sensor (3) and ends 5-15 seconds after the start of the $NO_x$ sensor (3).

8. The method of claim 6 or 7, wherein the second start-up time interval ($t_2$) starts 5-15s after the start of the $NO_x$ sensor (3) and ends 20-40 seconds after the start of the $NO_x$ sensor (3).

9. The method of any of the preceding claims 2-8, comprising:

   - estimating (S4) a timing of the predicted upcoming failure based on the time intervals ($t_1$, $t_2$, $t_3$) during which the noise level of the output signal exceeds the certain noise level.

10. The method of claim 9, comprising estimating (S4) that the $NO_x$ sensor (3) is about to fail within a certain time, based on the noise level of the output signal only exceeding the certain noise level during the at least one start-up time interval ($t_1$, $t_2$).

11. The method of any one of claims 9 and 10, comprising estimating (S4) that the $NO_x$ sensor (3) is failing before the certain time, based on the noise level of the output signal also exceeding the certain noise level during the operating time interval ($t_3$).

12. The method of any of the preceding claims, comprising:

   - providing (S5) a warning signal upon the predicting indicating an upcoming failure of the $NO_x$ sensor (3).

13. The method of any of the preceding claims, wherein start of sensor is defined as when sensor starts to deliver a first high $NO_x$ value, such as more than 3000 ppm.

14. The method of any of the preceding claims, wherein the $NO_x$ sensor (3) is a tail pipe sensor or an engine out sensor.

15. The method of any of the preceding claims, wherein the noise level is estimated to correspond to a variation of the output signal of the $NO_x$ sensor (3) over an evaluation period, wherein the variation is compensated for an output signal level change over the evaluation period.

16. A computer program comprising instructions which, when the program is executed by a computer, cause the computer to carry out the method of any one of the claims 1 to 15.

17. A computer-readable storage medium comprising instructions which, when executed by a computer, cause the computer to carry out the method of any one of the claims 1 to 15.

18. A control arrangement (10) for use in a vehicle comprising a $NO_x$ sensor (3), wherein the control arrangement (10) is configured to:

- estimate (S1) a noise level of an output signal of the $NO_x$ sensor (3), repetitively over time, during at least one start-up time interval ($t_1$, $t_2$) that takes place shortly after each time the $NO_x$ sensor (3) is started, and
- predict (S3) an upcoming failure of the $NO_x$ sensor (3) based on the estimated noise level exceeding a certain noise level during the at least one start-up time interval ($t_1$, $t_2$),

wherein during the start-up time interval ($t_1$, $t_2$) an output signal of the $NO_x$ sensor (3) is settling towards a valid value and wherein the at least one start-up time interval ($t_1$, $t_2$) is succeeded by an operating time interval ($t_3$) during which the output signal is expected to be valid.

19. The control arrangement (10) according to claim 18, wherein the control arrangement is configured to perform the method according to any one of claims 2 to 15.

20. A vehicle (1) comprising:

- a $NO_x$ sensor (3) and
- the control arrangement (10) according to claim 18 or 19.

**Patentansprüche**

1. Verfahren zur Vorhersage eines bevorstehenden Ausfalls eines in einem Fahrzeug (1) angeordneten $NO_x$-Sensors (3), wobei das Verfahren umfasst:

- Schätzen (S1) eines Rauschpegels eines Ausgangssignals des $NO_x$-Sensors (3), wobei die Schätzung (S1) nach wenigstens einem Sensorstart und während wenigstens eines Anlaufzeitraums ($t_1$, $t_2$) erfolgt, der mit einem bestimmten Zeitabstand zu dem wenigstens einen Sensorstart beginnt,

wobei sich während des Anlaufzeitraums ($t_1$, $t_2$) ein Ausgangssignal des $NO_x$-Sensors (3) auf einen gültigen Wert einpendelt und
wobei auf den wenigstens einen Anlaufzeitraum ($t_1$, $t_2$) ein Betriebszeitraum ($t_3$) folgt, während dessen von einem gültigen Ausgangssignal des $NO_x$-Sensors (3) ausgegangen wird, und

- Vorhersagen (S3) eines bevorstehenden Ausfalls des $NO_x$-Sensors (3) anhand des geschätzten Rauschpegels, der während des wenigstens einen Anlaufzeitraums ($t_1$, $t_2$) einen bestimmten Rauschpegel überschreitet.

2. Verfahren nach Anspruch 1, wobei der wenigstens eine Anlaufzeitraum ($t_1$, $t_2$) spätestens 20 s nach einem Sensorstart beginnt und spätestes 180 Sekunden nach einem Sensorstart endet.

3. Verfahren nach Anspruch 1 oder 2, wobei ein Sensorstart als ein Zeitpunkt nach dem Einschalten des Sensors definiert ist, zu dem der $NO_x$-Sensor (3) damit beginnt, "nicht statische" Werte zu liefern.

4. Verfahren nach einem der vorangehenden Ansprüche, wobei dem Sensorstart ein Anlaufbetrieb vorausgeht, der den $NO_x$-Sensor (3) von einer Bereitschaftstemperatur auf eine Betriebstemperatur bringt, bei der der $NO_x$-Sensor (3) "nicht statische" Werte liefert.

5. Verfahren nach einem der vorangehenden Ansprüche, umfassend:

- Schätzen (S2) eines Rauschpegels des Ausgangssignals des $NO_x$-Sensors (3) während des Betriebszeitraums ($t_3$) und Vorhersagen (S3) des bevorstehenden Ausfalls des $NO_x$-Sensors (3) auch anhand des geschätzten Rauschpegels während des Betriebszeitraums ($t_3$).

6. Verfahren nach einem der vorangehenden Ansprüche, wobei der wenigstens eine Anlaufzeitraum ($t_1$, $t_2$) einen ersten Anlaufzeitraum ($t_1$) und einen zweiten Anlaufzeitraum ($t_2$) umfasst und wobei das Vorhersagen (S3) auf jeweiligen geschätzten Rauschpegeln während des ersten und des zweiten Anlaufzeitraums ($t_1$, $t_2$) beruht.

7. Verfahren nach Anspruch 6, wobei der erste Anlaufzeitraum ($t_1$) 2-10s nach dem Start des $NO_x$-Sensors (3) beginnt und 5-15 Sekunden nach dem Start des $NO_x$-Sensors (3) endet.

8. Verfahren nach Anspruch 6 oder 7, wobei der zweite Anlaufzeitraum ($t_2$) 5-15 s nach dem Start des $NO_x$-Sensors (3) beginnt und 20-40 Sekunden nach dem Start des $NO_x$-Sensors (3) endet.

9. Verfahren nach einem der vorangehenden Ansprüche 2-8, umfassend:

   - Schätzen (S4) eines Zeitpunkts des vorhergesagten bevorstehenden Ausfalls anhand der Zeiträume ($t_1$, $t_2$, $t_3$), in denen der Rauschpegel des Ausgangssignals über dem bestimmten Rauschpegel liegt.

10. Verfahren nach Anspruch 9, umfassend das Schätzen (S4), dass der $NO_x$-Sensor (3) innerhalb einer bestimmten Zeit ausfallen wird, ausgehend davon, dass der Rauschpegel des Ausgangssignals den bestimmten Rauschpegel nur während des wenigstens einen Anlaufzeitraums ($t_1$, $t_2$) überschreitet.

11. Verfahren nach einem der Ansprüche 9 und 10, umfassend das Schätzen (S4), dass der $NO_x$-Sensor (3) vor der bestimmten Zeit ausfällt, ausgehend davon, dass der Rauschpegel des Ausgangssignals den bestimmten Rauschpegel auch während des Betriebszeitraums ($t_3$) überschreitet.

12. Verfahren nach einem der vorangehenden Ansprüche, umfassend:

   - Abgeben (S5) eines Warnsignals, wenn die Vorhersage einen bevorstehenden Ausfall des $NO_x$-Sensors (3) anzeigt.

13. Verfahren nach einem der vorangehenden Ansprüche, wobei ein Sensorstart als Zeitpunkt definiert ist, an dem ein Sensor damit beginnt, einen ersten hohen $NO_x$-Wert, z. B. über 3000 ppm, zu liefern.

14. Verfahren nach einem der vorangehenden Ansprüche, wobei der $NO_x$-Sensor (3) ein Auspuffsensor oder ein Motorausgangssensor ist.

15. Verfahren nach einem der vorangehenden Ansprüche, wobei der Rauschpegel geschätzt wird, um einer Variation des Ausgangssignals des $NO_x$-Sensors (3) über einen Auswertezeitraum entsprechen, wobei die Variation für eine Ausgangssignalpegeländerung über den Auswertezeitraum kompensiert wird.

16. Computerprogramm mit Befehlen, die, wenn das Programm von einem Computer ausgeführt wird, den Computer dazu veranlassen, das Verfahren nach einem der Ansprüche 1 bis 15 auszuführen.

17. Computerlesbares Speichermedium mit Befehlen, die, wenn sie von einem Computer ausgeführt werden, den Computer dazu veranlassen, das Verfahren nach einem der Ansprüche 1 bis 15 auszuführen.

18. Steueranordnung (10) zur Verwendung in einem Fahrzeug mit einem $NO_x$-Sensor (3), wobei die Steueranordnung (10) eingerichtet ist zum:

   - Schätzen (S1) eines Rauschpegels eines Ausgangssignals des $NO_x$-Sensors (3) wiederholt über die Zeit während wenigstens eines Anlaufzeitraums ($t_1$, $t_2$), der kurz nach jedem Start des $NO_x$-Sensors (3) stattfindet, und
   - Vorhersagen (S3) eines bevorstehenden Ausfalls des $NO_x$-Sensors (3) anhand des geschätzten Rauschpegels, der während des wenigstens einen Anlaufzeitraums ($t_1$, $t_2$) einen bestimmten Rauschpegel überschreitet,

   wobei sich während des Anlaufzeitraums ($t_1$, $t_2$) ein Ausgangssignal des $NO_x$-Sensors (3) auf einen gültigen Wert einpendelt und wobei auf den wenigstens einen Anlaufzeitraum ($t_1$, $t_2$) ein Betriebszeitraum ($t_3$) folgt, während dessen von einem gültigen Ausgangssignal ausgegangen wird.

19. Steueranordnung (10) nach Anspruch 18, wobei die Steueranordnung zum Ausführen des Verfahrens nach einem der Ansprüche 2 bis 15 eingerichtet ist.

20. Fahrzeug (1), umfassend:

- einen $NO_x$ Sensor (3) und
- die Steueranordnung (10) nach Anspruch 18 oder 19.

**Revendications**

1. Procédé pour prédire une défaillance prochaine d'un capteur de $NO_x$ (3) agencé dans un véhicule (1), le procédé comprenant :

    - l'estimation (S1) d'un niveau de bruit d'un signal de sortie du capteur $NO_x$ (3), dans lequel l'estimation (S1) est réalisée après au moins un démarrage de capteur et pendant au moins un intervalle de temps de démarrage $(t_1, t_2)$ commençant avec un certain décalage par rapport à l'au moins un démarrage de capteur, dans lequel pendant l'intervalle de temps de démarrage $(t_1, t_2)$, un signal de sortie du capteur de $NO_X$ (3) est réglé sur une valeur valide et dans lequel l'au moins un intervalle de temps de démarrage $(t_1, t_2)$ est suivi d'un intervalle de temps de fonctionnement $(t_3)$ pendant lequel le signal de sortie du capteur de $NO_X$ (3) est attendu comme étant valide, et
    - la prédiction (S3) d'une défaillance prochaine du capteur de $NO_X$ (3) sur la base du niveau de bruit estimé dépassant un certain niveau de bruit pendant l'au moins un intervalle de temps de démarrage $(t_1, t_2)$.

2. Procédé selon la revendication 1, dans lequel l'au moins un intervalle de temps de démarrage $(t_1, t_2)$ commence au plus tard 20 s après un démarrage de capteur et se termine au plus tard 180 secondes après un démarrage de capteur.

3. Procédé selon la revendication 1 ou 2, dans lequel un démarrage de capteur est défini comme un instant dans le temps après que le capteur est mis en marche lorsque le capteur de $NO_X$ (3) commence à délivrer des valeurs « non statiques ».

4. Procédé selon l'une quelconque des revendications précédentes, dans lequel le démarrage du capteur est précédé d'une opération de chauffage qui amène le capteur de $NO_X$ (3) d'une température de veille à une température de fonctionnement à laquelle le capteur de $NO_X$ (3) délivre des valeurs « non statiques ».

5. Procédé selon l'une quelconque des revendications précédentes, comprenant :

    - l'estimation (S2) d'un niveau de bruit du signal de sortie du capteur de $NO_x$ (3) pendant l'intervalle de temps de fonctionnement $(t_3)$ et la prédiction (S3) de la défaillance prochaine du capteur de $NO_X$ (3) également sur la base du niveau de bruit estimé pendant l'intervalle de temps de fonctionnement $(t_3)$.

6. Procédé selon l'une quelconque des revendications précédentes, dans lequel l'au moins un intervalle de temps de démarrage $(t_1, t_2)$ comprend un premier intervalle de temps de démarrage $(t_1$ et un deuxième intervalle de temps de démarrage $(t_2)$ et dans lequel la prédiction (S3) est basée sur des niveaux de bruit estimés respectifs pendant les premier et deuxième intervalles de temps de démarrage $(t_1, t_2)$.

7. Procédé selon la revendication 6, dans lequel le premier intervalle de temps de démarrage $(t_1)$ commence à 2 - 10 s après le démarrage du capteur de $NO_X$ (3) et se termine 5 - 15 secondes après le démarrage du capteur de $NO_X$ (3).

8. Procédé selon la revendication 6 ou 7, dans lequel le deuxième intervalle de temps de démarrage $(t_2)$ commence 5 - 15 s après le démarrage du capteur de $NO_X$ (3) et se termine 20 - 40 secondes après le démarrage du capteur de $NO_X$ (3).

9. Procédé selon l'une quelconque des revendications précédentes 2 à 8, comprenant :

    - l'estimation (S4) d'une temporisation de la défaillance prochaine prédite sur la base des intervalles de temps $(t_1, t_2, t_3)$ pendant lesquels le niveau de bruit du signal de sortie dépasse le certain niveau de bruit.

10. Procédé selon la revendication 9, comprenant le fait d'estimer (S4) que le capteur de $NO_X$ (3) est sur le point de tomber en panne dans un certain temps, sur la base du niveau de bruit du signal de sortie dépassant seulement le certain niveau de bruit pendant l'au moins un intervalle de temps de démarrage $(t_1, t_2)$.

**11.** Procédé selon l'une quelconque des revendications 9 et 10, comprenant le fait d'estimer (S4) que le capteur de $NO_X$ (3) est défaillant avant le certain temps, sur la base du niveau de bruit du signal de sortie dépassant également le certain niveau de bruit pendant l'intervalle de temps de fonctionnement ($t_3$).

**12.** Procédé selon l'une quelconque des revendications précédentes, comprenant :

- la fourniture (S5) d'un signal d'avertissement lors de la prédiction indiquant une défaillance prochaine du capteur de $NO_X$ (3) .

**13.** Procédé selon l'une quelconque des revendications précédentes, dans lequel le démarrage du capteur est défini comme étant le moment auquel le capteur commence à délivrer une première valeur $NO_x$ élevée, telle que plus de 3 000 ppm.

**14.** Procédé selon l'une quelconque des revendications précédentes, dans lequel le capteur de $NO_X$ (3) est un capteur de tuyau de queue ou un capteur de sortie de moteur.

**15.** Procédé selon l'une quelconque des revendications précédentes, dans lequel le niveau de bruit est estimé pour correspondre à une variation du signal de sortie du capteur de $NO_X$ (3) sur une période d'évaluation, dans lequel la variation est compensée pour un changement de niveau de signal de sortie sur la période d'évaluation.

**16.** Programme d'ordinateur comprenant des instructions qui, lorsque le programme est exécuté par un ordinateur, amènent l'ordinateur à effectuer le procédé selon l'une quelconque des revendications 1 à 15.

**17.** Support de stockage lisible par ordinateur comprenant des instructions qui, lorsqu'elles sont exécutées par un ordinateur, amènent l'ordinateur à effectuer le procédé selon l'une quelconque des revendications 1 à 15.

**18.** Agencement de commande (10) destiné à être utilisé dans un véhicule comprenant un capteur de $NO_X$ (3), dans lequel l'agencement de commande (10) est configuré pour :

- estimer (S1) un niveau de bruit d'un signal de sortie du capteur de $NO_X$ (3), de manière répétitive dans le temps, pendant au moins un intervalle de temps de démarrage ($t_1$, $t_2$) qui a lieu peu de temps après chaque temps auquel le capteur de $NO_X$ (3) est démarré, et
- prédire (S3) une défaillance prochaine du capteur de $NO_X$ (3) sur la base du niveau de bruit estimé dépassant un certain niveau de bruit pendant l'au moins un intervalle de temps de démarrage ($t_1$, $t_2$),

dans lequel pendant l'intervalle de temps de démarrage ($t_1$, $t_2$) un signal de sortie du capteur de $NO_X$ (3) est réglé sur une valeur valide et dans lequel l'au moins un intervalle de temps de démarrage ($t_1$, $t_2$) est suivi d'un intervalle de temps de fonctionnement ($t_3$) pendant lequel le signal de sortie est attendu comme étant valide.

**19.** Agencement de commande (10) selon la revendication 18, dans lequel l'agencement de commande est configuré pour réaliser le procédé selon l'une quelconque des revendications 2 à 15.

**20.** Véhicule (1) comprenant :

- un capteur de $NO_X$ (3) et
- l'agencement de commande (10) selon la revendication 18 ou 19.

Fig. 1

Fig. 2

Fig. 3a

Fig. 3b

```
┌─────────────────────────────────────────────────────────────┐
│                              S1                               │
│  Estimate, after at least one sensor start and during at least│
│  one start-up time interval starting with a certain offset    │
│  from the at least one sensor start, a noise level of an      │
│  output signal of a NOx sensor                                │
└─────────────────────────────────────────────────────────────┘
                              │
┌─ ─ ─ ─ ─ ─ ─ ─ ─ ─ ─ ─ ─ ─ ─┴─ ─ ─ ─ ─ ─ ─ ─ ─ ─ ─ ─ ─ ─ ─┐
│                              S2                               │
│  Estimate a noise level of an output signal of the NOx sensor │
│  during the operating time interval                           │
└─ ─ ─ ─ ─ ─ ─ ─ ─ ─ ─ ─ ─ ─ ─┬─ ─ ─ ─ ─ ─ ─ ─ ─ ─ ─ ─ ─ ─ ─┘
                              │
┌─────────────────────────────┴───────────────────────────────┐
│                              S3                               │
│  Predict an upcoming failure of the NOx sensor based on the   │
│  monitored noise level exceeding a certain noise level during │
│  the at least one start-up time interval                      │
└─────────────────────────────┬───────────────────────────────┘
                              │
┌─ ─ ─ ─ ─ ─ ─ ─ ─ ─ ─ ─ ─ ─ ─┴─ ─ ─ ─ ─ ─ ─ ─ ─ ─ ─ ─ ─ ─ ─┐
│                              S4                               │
│  Estimate a timing of the predicted upcoming failure based on │
│  the time intervals during which the noise level of an output │
│  signal exceeds the predetermined threshold                   │
└─ ─ ─ ─ ─ ─ ─ ─ ─ ─ ─ ─ ─ ─ ─┬─ ─ ─ ─ ─ ─ ─ ─ ─ ─ ─ ─ ─ ─ ─┘
                              │
┌─ ─ ─ ─ ─ ─ ─ ─ ─ ─ ─ ─ ─ ─ ─┴─ ─ ─ ─ ─ ─ ─ ─ ─ ─ ─ ─ ─ ─ ─┐
│                              S5                               │
│  Provide a warning signal upon the predicting indicating an   │
│  upcoming failure of the NOx sensor                           │
└─ ─ ─ ─ ─ ─ ─ ─ ─ ─ ─ ─ ─ ─ ─ ─ ─ ─ ─ ─ ─ ─ ─ ─ ─ ─ ─ ─ ─ ─┘
```

Fig. 4

```
┌──────────────────────────────┐
│ 10 ECU              ┌────────┐│
│                     │        ││
│                     │  103   ││
│                     └────────┘│
│    ┌─ ─ ─ ┐  ┌─ ─ ─ ─ ─ ┐    │
│    │ 101  │  │ 102       │    │
│    │      │  │      'P'  │    │
│    └─ ─ ─ ┘  └─ ─ ─ ─ ─ ┘    │
└──────────────────────────────┘
```

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020222641 A1